# EUROPÄISCHE PATENTANMELDUNG

(11) **EP 3 901 084 A1**
(43) Veröffentlichungstag der Anmeldung: **27.10.2021**
(21) Anmeldenummer: 21170255.0
(22) Anmeldetag: 23.04.2021
(51) Int. Cl.: B67C 7/00, B65G 33/06, B65G 47/84

(54) **VORRICHTUNG ZUM LINEAREN TRANSPORTIEREN VON BEHÄLTERN**

(30) Priorität: 23.04.2020 DE 102020111119
(71) Anmelder: KRONES AG, 93073 Neutraubling (DE)
(72) Erfinder: Landler, Bruno, 93073 Neutraubling (DE); Schoenfelder, Markus, 93073 Neutraubling (DE); Schmid, Bastian, 93073 Neutraubling (DE)
(74) Vertreter: Nordmeyer, Philipp Werner

(57) **Zusammenfassung**

Vorrichtung (30) zum Transportieren eines Behälters (2), vorzugsweise in einer Getränkeabfüllanlage, wobei die Vorrichtung (30) aufweist: ein Schienensystem (31), das eingerichtet ist, um den Behälter (2) entlang einer linearen Trajektorie zu führen; und ein Transportsystem (32, 33), das eingerichtet ist, um den Behälter (2) entlang des Schienensystems (31) zu transportieren, vorzugsweise durch eine formschlüssige Verbindung.

## Beschreibung

### Technisches Gebiet

Die vorliegende Erfindung betrifft eine Vorrichtung zum Transportieren eines Behälters sowie eine Vorrichtung zum Befüllen eines Behälters mit einem Füllprodukt und zum Verschließen des Behälters mit einem Verschluss. Die Vorrichtungen kommen insbesondere in einer Getränkeabfüllanlage zur Anwendung, so etwa zum Abfüllen von Wasser (still oder karbonisiert), Softdrinks, Bier, Saft, Smoothies, Milchprodukten, Mixgetränken und dergleichen.

### Stand der Technik

Auf dem Gebiet der Getränkeabfüllanlagen ist es bekannt, Behälter in einem Füller mit einem Füllprodukt zu befüllen und anschließend mittels einer Übergabevorrichtung an einen Verschließer zu übergeben, der auf die Behälter jeweils einen Verschluss appliziert. Als Füller, Übergabevorrichtung und Verschließer kommen hierbei zumeist Vorrichtungen in Rundläuferbauweise zum Einsatz, bei denen die Behälter, während sie befördert und gegebenenfalls behandelt werden, bauartbedingt eine Zentrifugalbeschleunigung erfahren.

Vorrichtungen dieser oder ähnlicher Bauart gehen beispielsweise aus der DE 10 2016 110 722 A1 und der DE 10 2017 130 036 A1 hervor.

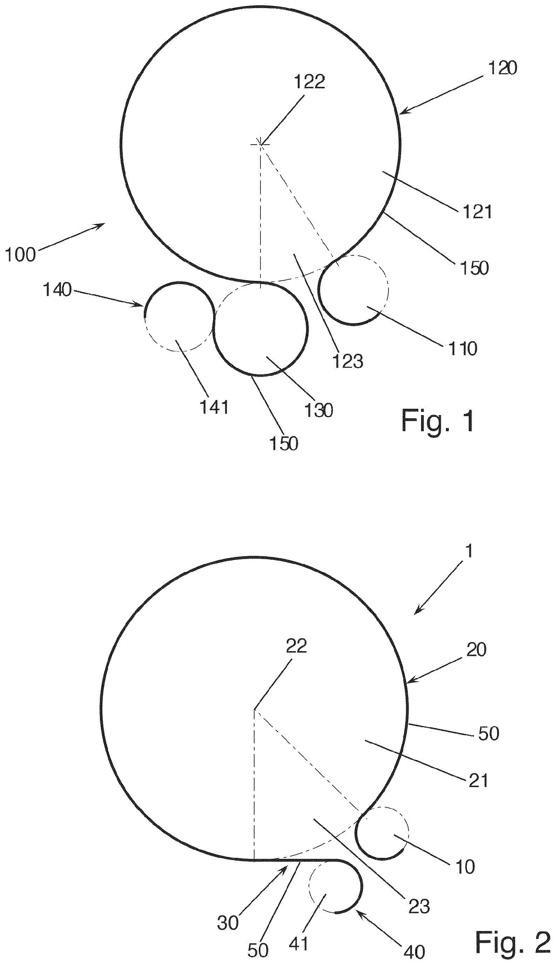

Die Figur 1 zeigt eine schematische Draufsicht auf eine herkömmliche Vorrichtung 100 zum Befüllen und Verschließen von Behältern gemäß dem Stand der Technik. Die Behälter sind in der Figur nicht gezeigt.

Über einen Einlaufstern 110, der eine Transportvorrichtung für Behälter in Rundläuferbauweise ist, werden die zu befüllenden Behälter an einen Rundläufer 121 einer Füllvorrichtung 120 übergeben. Der Rundläufer 121 ist um eine Drehachse 122 rotierbar. Der Rundläufer 121 weist an seinem Umfang eine Mehrzahl von in der Figur 1 nicht gezeigten Füllorganen auf, die zum Befüllen der Behälter mit einem Füllprodukt, vorzugsweise einem Getränk wie Wasser, Softdrinks, Bier, Saft und dergleichen, eingerichtet sind.

Das Befüllen der Behälter kann bis auf ein kleines Winkelsegment 123, das auch als "Füllertotwinkel" bezeichnet wird, im Wesentlichen den gesamten Umfang des Rundläufers 121 beanspruchen, bevor die Behälter nach dem Befüllen an einen Auslaufstern 130, der als Füllerauslauf und zur Übergabe der Behälter an eine Verschließvorrichtung 140 dient, übergeben werden.

Die Verschließvorrichtung 140 umfasst ebenfalls einen Rundläufer 141, der an seinem Umfang eine Mehrzahl von in der Figur 1 nicht dargestellten Verschließorganen aufweist, die zum Verschließen der befüllten Behälter mit jeweils einem Verschluss, wie etwa einem Drehverschluss oder einem Kronkorken, eingerichtet sind.

Der Transportweg 150, den die Behälter durch die verschiedenen Stationen der Vorrichtung 100 zurücklegen, ist in der Figur 1 durch eine fette Linie entlang der Umfänge der Rundläufer, d.h. des Einlaufsterns 110, des Rundläufers 121 der Füllvorrichtung 120, des Auslaufsterns 130 sowie des Rundläufers 141 der Füllvorrichtung 140, dargestellt.

Der Transport und die Übergabe der Behälter von einem Rundläufer zum nächsten erfolgt mittels geeigneter Halteeinrichtungen, die in der Figur 1 nicht dargestellt sind. Im Fall von zu befüllenden PET-Flaschen können die Halteeinrichtungen die Behälter beispielsweise am Mündungsabschnitt unterhalb eines Sicherungsringes greifen, so dass die Behälter hängend transportiert, befüllt und verschlossen werden. Die Halteeinrichtungen können zu diesem Zweck Klammern aufweisen, die zum Greifen der Behälter eingerichtet sind. Das Öffnen und Schließen der Klammern wird dabei zumeist über eine entsprechende Kurvenrolle gesteuert, die auf einer Kurvenscheibe abrollt.

Aus dem Transportweg 150 der Behälter gemäß der Figur 1 geht hervor, dass die Behälter bei der Übergabe von einem zum nächsten Rundläufer starken Richtungsänderungen unterworfen sind, wodurch vergleichsweise hohe Fliehkräfte auf die Behälter und deren Inhalt wirken. Dies kann dazu führen, dass Füllgut aus den noch offenen Behältern bei der Übergabe vom Rundläufer 121 der Füllvorrichtung 120 an den Auslaufstern 130 und/oder vom Auslaufstern 130 an den Rundläufer 141 der Verschließvorrichtung 140 überschwappt.

Dieses Problem tritt insbesondere bei einem hohen Füllstand sowie einer hohen Maschinenleistung auf. Daraus ergibt sich, dass die Fliehkräfte, die während des Transports der Behälter auf das Füllgut wirken, einer Effizienzsteigerung der Anlage sowie einer Verringerung von Verpackungsmaterial entgegenstehen.

Die DE 10 2017 130 036 A1 schlägt zur Reduktion der Schwappneigung vor, die Behälter schrägzustellen, um einen auf das im Behälter befindliche Füllprodukt wirkenden Impuls am Übergabepunkt, an dem der Behälter von einem Rundläufer zum nächsten Rundläufer übergeben wird, abzuschwächen oder auszugleichen. Hierfür ist es allerdings erforderlich, die Halteeinrichtungen schwenkbar zu gestalten und entsprechend anzusteuern, wodurch die maschinenbauliche Komplexität der Vorrichtung zunimmt.

### Darstellung der Erfindung

Eine Aufgabe der vorliegenden Erfindung besteht darin, eine verbesserte Vorrichtung zum Transportieren von Behältern bereitzustellen, vorzugsweise zur Übergabe von einer Füllvorrichtung an eine Verschließvorrichtung in einer Getränkeabfüllanlage. Insbesondere besteht eine Aufgabe der Erfindung darin, einem etwaigen Überschwappen des Füllprodukts beim Transport der Behälter auf maschinenbaulich kompakte und zuverlässige Weise entgegenzuwirken.

Die Aufgabe wird durch eine Vorrichtung zum Transportieren eines Behälters mit den Merkmalen des Anspruchs 1 sowie eine Vorrichtung zum Befüllen und Verschließen eines Behälters mit den Merkmalen des nebengeordneten Anspruchs 13 gelöst. Vorteilhafte Weiterbildungen folgen aus den Unteransprüchen, der folgenden Darstellung der Erfindung sowie der Beschreibung bevorzugter Ausführungsbeispiele.

Eine Vorrichtung gemäß der Erfindung dient zum Transport eines Behälters, insbesondere um den Behälter von einer Station, vorzugsweise einer Füllvorrichtung, an eine andere Station, vorzugsweise eine Verschließeinrichtung, zu übergeben. Die Vorrichtung wird hierin auch als "lineare Transfereinrichtung" oder kurz "Transfereinrichtung" bezeichnet. Sie kommt in Verbindung mit zumindest einem Rundläufer zur Anwendung. In anderen Worten, der Behälter wird von einer Vorrichtung beziehungsweise Station mit gekrümmter, vorzugsweise kreisförmiger, Transporttrajektorie an die lineare Transfereinrichtung übergeben. Alternativ oder zusätzlich wird der Behälter von der linearen Transfereinrichtung an eine Vorrichtung beziehungsweise Station mit gekrümmter, vorzugsweise kreisförmiger, Transporttrajektorie übergeben.

Mit der Bezeichnung "Rundläufer" wird hierin eine Vorrichtung, ein Anlagenteil oder dergleichen verstanden, die/der einen oder mehrere Behälter auf einer gekrümmten, vorzugsweise kreisförmigen, Trajektorie bewegt. Im Fall einer kreisförmigen Trajektorie genügt der Transport entlang eines Kreissegments, d.h. entlang eines Teilkreises. Ein vollständiger Umlauf um einen Vollkreis ist somit nicht erforderlich. Der Rundläufer kann allein dem Transport der Behälter dienen oder entsprechende Behandlungsorgane, wie etwa Füllorgane und/oder Verschließorgane, zur Behandlung der Behälter während des Transports aufweisen. Der Rundläufer kann mittels eines Karussells, eines umlaufenden Bands oder dergleichen realisiert sein.

Die lineare Transfereinrichtung kommt besonders bevorzugt in einer Getränkeabfüllanlage zur Anwendung, so etwa zum Abfüllen von Wasser (still oder karbonisiert), Softdrinks, Bier, Saft, Smoothies, Milchprodukten, Mixgetränken und dergleichen.

Die Vorrichtung gemäß der Erfindung weist ein Schienensystem auf, das eingerichtet ist, um den Behälter entlang einer linearen Trajektorie zu führen. In anderen Worten, zumindest ein Abschnitt des Transports durch die lineare Transfereinrichtung erfolgt entlang eines linearen, d.h. geradlinigen, Wegs. Die Vorrichtung weist ferner ein Transportsystem auf, das eingerichtet ist, um den Behälter entlang des Schienensystems zu transportieren, vorzugsweise durch eine formschlüssige Verbindung.

Auch wenn die Bezeichnung "Behälter" der sprachlichen Einfachheit halber hierin oft im Singular verwendet wird, sind die beschriebenen Vorrichtungen in der Regel zum Transport und zur Behandlung mehrerer Behälter eingerichtet. So ist die lineare Transfereinrichtung normalerweise für einen gleichzeitigen Transport mehrerer Behälter hintereinander konstruiert.

Erfindungsgemäß wird der Behälter vom Schienensystem geführt, d.h. er steht mit dem Schienensystem in Kontakt und gleitet entlang einer oder mehrerer Schienen, wodurch der Behälter an zumindest einem Punkt stabilisiert wird. Gleichzeitig wirkt auf den Behälter vom Transportsystem eine Transportkraft, wodurch der Behälter an zumindest einem weiteren Punkt stabilisiert wird. Auf diese Weise kann eine Pendelbewegung des Behälters unterbunden oder zumindest vermindert werden, wodurch die Wahrscheinlichkeit des Überschwappens verringert ist.

Ferner kann durch Anwendung der linearen Transfereinrichtung der Behälter nahezu unmittelbar von einer ersten Station an eine zweite Station übergeben werden, wobei die Übergabe auf einer linearen Strecke der Transfereinrichtung stattfindet. Ein Auslaufstern mit entsprechendem Rundläufer kann entfallen, wodurch eine die Transfereinrichtung aufweisende Gesamtanlage maschinenbaulich kompakter ausgeführt werden kann. Ein Transportstern benötigt einen gewissen Mindestdurchmesser, um insbesondere bei einer hohen Maschinenleistung zu verhindern, dass Füllgut aus den Behältern schwappt. Im Unterschied dazu kann der Transportweg offener Behälter bei Anwendung der linearen Transfereinrichtung deutlich verkürzt werden.

Gleichzeitig wird einem möglichen Überschwappen des Füllguts aus den Behältern entgegengewirkt, da die Fliehkräfte bei der Übergabe von einem Rundläufer zur linearen Transfereinrichtung und/oder von der linearen Transfereinrichtung zu einem Rundläufer reduziert werden. Die Richtungsänderungen bei der Übergabe fallen durch Anwendung der linearen Transfereinrichtung weniger drastisch aus. Die Reduktion der Fliehkräfte auf diese Weise kann zumindest zum Teil auch für eine Verkleinerung der etwaigen beteiligten Rundläufer genutzt werden.

Aus Gründen der Fliehkraftreduzierung steht die lineare Transfereinrichtung vorzugsweise so mit zumindest einem Rundläufer mit einer gekrümmten, vorzugsweise kreisförmigen, Transporttrajektorie in Verbindung, dass der Behälter von der gekrümmten Transporttrajektorie des Rundläufers an das Schienensystem übergeben wird und/oder der Behälter vom Schienensystem an die gekrümmte Transporttrajektorie des Rundläufers übergeben wird.

Vorzugsweise umfasst das Schienensystem einen linearen Abschnitt und einen in Transportrichtung des Behälters sich daran anschließenden gekrümmten Abschnitt, wobei der gekrümmte Abschnitt zur Übergabe an einen Rundläufer vorgesehen ist. Auf diese Weise kann ein sanfter und flüssiger Übergang der Behälter vom linearen Transport in einen Transport entlang einer gekrümmten Trajektorie bewerkstelligt werden.

Zu diesem Zweck weist das Schienensystem vorzugsweise eine Außenschiene auf, die im gekrümmten Abschnitt beispielsweise mit Garnituren des Rundläufers verbunden ist. Die Bezeichnung "Außen..." bezieht sich hierbei auf die Krümmung des Rundläufers, so dass die Beziehungen "innen" und "außen" eindeutig definiert sind.

Das Schienensystem weist vorzugsweise ferner zumindest im linearen Abschnitt eine Innenschiene auf, so dass zwischen der Innenschiene und der Außenschiene ein Spalt ausgebildet ist, der zum Führen eines Mündungsbereichs des Behälters eingerichtet ist. Im Fall von flaschenförmigen Behältern, beispielsweise PET-Flaschen, wird der Flaschenhals durch den so ausgebildeten Spalt geführt, wobei die beiden Schienen die Flasche vorzugsweise unterhalb eines Neckrings derselben stützen und führen. Auf diese Weise kann eine maschinenbaulich einfache und zuverlässige lineare Führung durch Schienen implementiert werden. Ferner können die Behälter hängend transportiert werden, so dass die lineare Transfereinrichtung baulich einfach in bestehende Systeme mit Rundläufern, welche die Behälter hängend transportieren, integrierbar ist.

Vorzugsweise umfasst das Transportsystem mindestens zwei Antriebssysteme, die eingerichtet sind, um je eine Transportkraft, beispielsweise eine Schubkraft, auf zumindest zwei verschiedene Abschnitte des Behälters, in Schwerkraftrichtung gesehen, aufzubringen. Auf diese Weise wird der Behälter weiter stabilisiert, so dass Ausweich- und Pendelbewegungen noch besser unterbunden werden können. Die Kraftübertragung auf den Behälter erfolgt an zumindest zwei unterschiedlichen Stellen, wodurch die Schwappneigung weiter verringert wird.

Vorzugsweise umfasst das Transportsystem ein Bandsystem, das zumindest zwei drehbare Scheiben und ein Band aufweist, das so um die Scheiben gewickelt ist, dass es von den Scheiben umlaufend antreibbar ist, wobei das Band mehrere Schubelemente aufweist, die eingerichtet sind, um den Behälter bei umlaufendem Band entlang des Schienensystems zu schieben. Das entsprechende Schubelement greift hierbei vorzugsweise im Bereich einer Mündung des Behälters an. Der Bereich der Mündung umfasst auch einen gegebenenfalls vorhandenen Neckring, der unterhalb eines gegebenenfalls vorhandenen Gewindes der Flasche ausgebildet ist. Die Schubelemente weisen eine geeignete Form auf, beispielsweise mit entsprechenden Ausnehmungen, die ein sicheres Erfassen der Behälter und Drücken derselben entlang des Schienensystems ermöglichen. Eine oder beide Scheiben werden über einen Aktuator oder mehrere synchronisierte Aktuatoren, vorzugsweise Elektromotoren, angetrieben. Die Scheiben können auf entsprechenden Wellen, vorzugsweise Sternsäulen, sitzen, über welche die Drehmomentübertragung auf die Scheiben erfolgt. Auf diese Weise wird ein zuverlässiges und flexibel anpassbares Transportsystem realisiert.

Vorzugsweise umfasst die Kraftübertragung von zumindest einer der Scheiben auf das Band einen Formschluss, um eine sichere und schlupffreie oder zumindest schlupfarme Kraftübertragung zu gewährleisten. Dadurch wird die Teilung beziehungsweise zeitlich genaue Position der Schubelemente relativ zum Transportweg sicher beibehalten, was insbesondere dann von großem Vorteil ist, wenn das Bandsystem mit anderen Maschinenkomponenten zu synchronisieren ist.

Vorzugsweise weist die betreffende Scheibe oder das Band Vorsprünge und die andere Komponente, d.h. Band oder Scheibe, entsprechende Aussparungen auf, in welche die Vorsprünge während des Umlaufs des Bands zeitweise in Eingriff kommen. Die Vorsprünge wirken somit mit entsprechenden Löchern beziehungsweise Aussparungen zusammen, so dass eine zuverlässige Kraftübertragung erzielbar ist. Vorzugsweise sind die Vorsprünge am Außenumfang einer oder beider Scheiben vorgesehen, während das Band die Aussparungen aufweist. Die Aussparungen rasten in die Vorsprünge ein, wodurch auf maschinenbaulich zuverlässige Weise der oben erwähnte Formschluss erzielt wird. Die Vorsprünge beziehungsweise Aussparungen sollten sich in einem regelmäßigen Winkelabstand am Außenumfang der entsprechenden Scheibe befinden. Vorzugsweise haben die Vorsprünge eine Kugelform, wobei damit die Gestalt eines Kugelausschnitts, insbesondere einer Halbkugel mitumfasst ist. Auf diese Weise lässt sich eine selbstzentrierende Wirkung erzielen, wodurch die Zuverlässigkeit und die Genauigkeit des Transports weiter verbessert werden können.

Vorzugsweise ist das Band ein Stahlband. Ein Stahlband weist ein hohes Kraft-/Gewichtsverhältnis und je nach Legierung eine hohe Widerstandsfähigkeit gegenüber Chemikalien, Feuchtigkeit und Korrosion auf. Ferner ist eine gute Haltbarkeit auch bei hohen Temperaturen und unter Vakuum gegeben. Eine Schmierung ist für den Betrieb des Stahlbands nicht erforderlich, wodurch sich insgesamt ein geringer Wartungsaufwand und eine hohe Zuverlässigkeit ergeben. Ein Stahlband kann vergleichsweise schwingungsarm betrieben werden und ist nicht oder nur unwesentlich dehnbar. Daraus ergibt sich, dass damit ein hoher Präzisionsgrad, eine genaue Anwendung und Reproduzierbarkeit erzielbar sind. Das Stahlband weist eine gute thermische und elektrische Leitfähigkeit auf und unterliegt keiner statischen Aufladung. Mit Anwendung eines Stahlbands kann ferner ein hoher Hygienegrad erzielt werden, wodurch es bei Reinraumanwendungen, etwa beim Abfüllen von Lebensmitteln oder Pharmazeutika, besonders geeignet ist. Aus diesen Gründen ist ein Band aus Stahl, umfassend geeignete Legierungen, für die hierin genannten Anwendungen besonders geeignet.

Das Band kann unterschiedlich gestaltet und aufgebaut sein. Vorzugsweise kommt ein streifenförmiges Teil, beispielsweise ein streifenförmiges Blech, mit entsprechenden Komponenten, wie beispielsweise Schubelementen, Öffnung für den oben erwähnten Formschluss und dergleichen, zum Einsatz. Allerdings kann das Band alternativ beispielsweise ein Draht, eine Kette oder einen Riemen umfassen.

Vorzugsweise umfasst das Transportsystem ein Doppelschneckensystem, das eine erste Schnecke und eine zweite Schnecke aufweist, die parallel zueinander angeordnet und jeweils um die eigene Achse drehbar sind. Die Schnecken weisen jeweils ein Transportgewinde auf, die eingerichtet sind, um den Behälter zumindest abschnittsweise zu umfassen, vorzugsweise seitlich an einem Bauchabschnitt des Behälters, so dass durch gegensinnige Drehung der Schnecken der Behälter in Transportrichtung gefördert wird. Auf diese Weise wird der Behälter zum einen stabilisiert, d.h. eine Pendelbewegung entlang der Transportrichtung (vor und zurück) sowie senkrecht zur Transportrichtung (rechts und links) wird unterbunden, und zum anderen wird der Behälter in Transportrichtung vorgeschoben. Zu diesem Zweck werden die Schnecken gegensinnig und synchron um ihre Achsen gedreht.

Gemäß einer bevorzugten Ausführungsform ist das Doppelschneckensystem zusätzlich zum Bandsystem vorgesehen. In diesem Fall sind die beiden Systeme miteinander synchronisiert, um einen gleichmäßigen und sicheren Transport der Behälter zu gewährleisten.

Vorzugsweise weisen die Transportgewinde jeweils einen V-förmigen Querschnitt auf, im Schnitt parallel zur Axialrichtung der Schnecken gesehen. Die V-Form der Transportgewinde ermöglicht auf maschinenbaulich einfache Weise eine Kompatibilität für verschiedene Behältergrößen, insbesondere verschiedene Flaschendurchmesser. Zur Einstellung auf eine geänderte Behältergröße muss lediglich der Mittelachsenabstand der Schnecken verändert werden. Ferner schieben die Schnecken den Behälter aufgrund der V-Form der Transportgewinde über nur zwei Angriffspunkte entlang der linearen Trajektorie der Transfereinrichtung, wodurch der Behälter besonders schonend behandelt wird.

Vorzugsweise weisen die Transportgewinde einen Gewindeausschnitt auf, der ausgehend von einem Einlauf des Behälters in das Doppelschneckensystem, an dem der Gewindeausschnitt so groß ausgebildet ist, dass die Schnecken den Behälter noch nicht berühren, nach und nach kleiner wird, bis der Gewindeausschnitt den Behälter berührt und insofern formschlüssig umfasst. Auf diese Weise wird ein sanftes und schonendes Einlaufen der Behälter in das Doppelschneckensystem ermöglicht, ohne dass starke Impulse auf die Behälter wirken, die zu einem Überschwappen des Füllprodukts führen könnten.

Der "Gewindeausschnitt" bezeichnet hierbei die Aussparungstiefe des Transportgewindes, die bei gleichbleibendem V-Winkel die axiale Länge der Gewindeausnehmung am Außenumfang der Schnecke mitbestimmt. Der Gewindeausschnitt wird gemäß der oben dargelegten bevorzugten Ausführungsform nach und nach kleiner, bis der gewünschte beziehungsweise erforderliche Ausschnitt erreicht ist und der Behälter im Wesentlichen ausreichend umfasst beziehungsweise ummantelt ist, so dass die Schnecken den Behälter durch Berührung und Formschluss vortreiben können.

Die oben genannte Aufgabe wird ferner mit einer Vorrichtung zum Befüllen und Verschließen eines Behälters, vorzugsweise in einer Getränkeabfüllanlage, gelöst. Die Vorrichtung weist auf: eine Füllvorrichtung zum Befüllen des Behälters mit einem Füllprodukt; eine Verschließvorrichtung zum Verschließen des mit dem Füllprodukt befüllten Behälters mit einem Verschluss; und eine Vorrichtung zum Transportieren des Behälters gemäß einer Ausführungsform der vorstehenden Beschreibung. Die Vorrichtung zum Transportieren des Behälters ist eingerichtet, um den mit dem Füllprodukt befüllten Behälter von der Füllvorrichtung zu übernehmen, linear zu transportieren und anschließend an die Verschließvorrichtung zu übergeben.

Die Merkmale, technischen Wirkungen, Vorteile sowie Ausführungsbeispiele, die in Bezug auf die lineare Transfervorrichtung beschrieben wurden, gelten analog für die Vorrichtung zum Befüllen und Verschließen eines Behälters, welche die lineare Transfervorrichtung verwendet.

So weist die Füllvorrichtung aus den oben genannten Gründen einen Rundläufer auf, der eingerichtet ist, um den Behälter während der Befüllung entlang einer gekrümmten, vorzugsweise kreisförmigen, Trajektorie zu transportieren. Alternativ oder zusätzlich weist die Verschließvorrichtung aus den oben genannten Gründen einen Rundläufer auf, der eingerichtet ist, um den Behälter während des Verschließens entlang einer gekrümmten, vorzugsweise kreisförmigen, Trajektorie zu transportieren.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Draufsicht auf eine Vorrichtung zum Befüllen und Verschließen von Behältern gemäß dem Stand der Technik;
- Figur 2: eine schematische Draufsicht auf eine Vorrichtung zum Befüllen und Verschließen von Behältern gemäß einem Ausführungsbeispiel;
- Figur 3: eine schematische dreidimensionale Ansicht von Transportkomponenten einer linearen Transfereinrichtung gemäß einem Ausführungsbeispiel;
- Figur 4: eine schematische dreidimensionale Ansicht einer linearen Transfereinrichtung gemäß einem Ausführungsbeispiel;
- Figur 5: eine schematische dreidimensionale Ansicht eines Schienensystems der linearen Transfereinrichtung gemäß den Figuren 3 und 4;
- Figur 6: eine schematische Draufsicht auf eine lineare Transfereinrichtung mit einem schematisch dargestellten Einlauf beispielsweise von einer Füllvorrichtung;
- Figur 7: eine schematische dreidimensionale Ansicht eines Bandsystems der linearen Transfereinrichtung gemäß den Figuren 3 und 4;
- Figur 8: eine schematische dreidimensionale Teilansicht des Bandsystems gemäß der Figur 7;
- Figur 9: eine schematische dreidimensionale Teilansicht eines Bandsystems gemäß einem weiteren Ausführungsbeispiel;
- Figur 10: eine schematische dreidimensionale Ansicht eines Doppelschneckensystems der linearen Transfereinrichtung gemäß den Figuren 3 und 4;
- Figur 11: einen schematischen Querschnitt des Doppelschneckensystems mit eingelegtem Behälter, parallel zur Axialrichtung der Schnecken genommen;
- Figur 12: einen schematischen Querschnitt des Doppelschneckensystems mit eingelegtem Behälter kleineren Durchmessers, parallel zur Axialrichtung der Schnecken genommen;
- Figur 13: einen schematischen Querschnitt des Doppelschneckensystems mit eingelegtem Behälter am Behältereinlauf für eine sanfte Behälteraufnahme;
- Figur 14: einen Querschnitt des Doppelschneckensystems mit eingelegtem Behälter im weiteren Verlauf der Transportstrecke;
- Figur 15: einen schematischen Querschnitt einer Schnecke des Doppelschneckensystems mit veränderlichem Gewindeausschnitt;
- Figur 16: eine schematische Teildraufsicht auf das Doppelschneckensystem mit einem schematisch dargestellten Einlauf beispielsweise von einer Füllvorrichtung.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanz zu vermeiden.

Die Figur 2 zeigt eine schematische Draufsicht auf eine Vorrichtung 1 zum Befüllen und Verschließen von Behältern gemäß einem Ausführungsbeispiel. Die Behälter sind in der Figur 2 nicht gezeigt. Die Figur 2 ist in ihrer Gestaltung an die Figur 1 angelehnt, wodurch ein technischer Beitrag, nämlich der nachstehend im Detail dargelegte Lineartransfer vom Füller zum Verschließer, daraus besonders deutlich hervorgeht.

Zunächst werden die zu befüllenden Behälter wie im Stand der Technik gemäß der Figur 1 über einen Einlaufstern 10, der eine Transportvorrichtung für Behälter in Rundläuferbauweise ist, an einen Rundläufer 21 einer Füllvorrichtung 20 übergeben. Der Rundläufer 21 ist um eine Drehachse 22 rotierbar. Der Rundläufer 21 weist an seinem Umfang eine Mehrzahl von in der Figur 2 nicht gezeigten, zeitgesteuerten Füllorganen auf, die zum Befüllen der Behälter mit einem Füllprodukt, vorzugsweise einem Getränk wie Wasser, Softdrinks, Bier, Saft und dergleichen, eingerichtet sind.

Das Befüllen der Behälter kann bis auf ein kleines Winkelsegment 23, das auch als "Füllertotwinkel" bezeichnet wird, im Wesentlichen den gesamten Umfang des Rundläufers 21 beanspruchen, bevor die Behälter nach dem Befüllen an eine Vorrichtung 30 zum linearen Transportieren von Behältern übergeben wird. An die Stelle des Auslaufsterns 130 gemäß der Figur 1 tritt somit die Vorrichtung 30, die hierin auch als "lineare Transfereinrichtung" oder kurz "Transfereinrichtung" bezeichnet ist.

Die Behälter werden von der linearen Transfereinrichtung 30 an eine Verschließvorrichtung 40 übergeben, die einen Rundläufer 41 umfasst, der an seinem Umfang eine Mehrzahl von in der Figur 2 nicht gezeigten Verschließorganen aufweist, die zum Verschließen der befüllten Behälter mit jeweils einem Verschluss, wie etwa einem Drehverschluss oder einem Kronkorken, eingerichtet sind.

Der Transportweg 50, den die Behälter durch die verschiedenen Stationen der Vorrichtung 1 zurücklegen, ist in der Figur 2 durch eine dicke Linie entlang der Umfänge der Rundläufer, d.h. des Einlaufsterns 10, des Rundläufers 21 der Füllvorrichtung 20 sowie des Rundläufers 41 der Füllvorrichtung 40, und entlang der linearen Transfereinrichtung 30 dargestellt.

Die Behälter werden somit im Wesentlichen direkt von der Füllvorrichtung 20 zur Verschließvorrichtung 40 übergeben, wobei die Übergabe auf einer vergleichsweise kurzen, linearen Strecke der Transfereinrichtung 30 stattfindet. Ein Auslaufstern mit entsprechendem Rundläufer kann entfallen, wodurch die Vorrichtung 1 maschinenbaulich besonders kompakt ausgeführt werden kann. Der Transportweg 50 der offenen Behälter kann im Vergleich zur Anwendung eines Rundläufers verkürzt werden.

Gleichzeitig wird einem möglichen Überschwappen des Füllguts aus den Behältern entgegengewirkt, da die Fliehkräfte bei der Übergabe vom Rundläufer 21 der Füllvorrichtung 20 zur Transfereinrichtung 30 und von der Transfereinrichtung 30 zum Rundläufer 41 der Verschließvorrichtung 40 reduziert werden sowie der Transportweg 50 der offenen Behälter insgesamt verkürzt wird. Die Reduktion der Fliehkräfte kann zumindest zum Teil auch für eine Verkleinerung der Verschließvorrichtung 40 genutzt werden.

Der Behältertransport in der Transfereinrichtung 30 kommt vorzugsweise durch eine Kombination verschiedener Fördermittel zustande. So können beispielsweise eine Schienenkonstruktion, auf der flaschenförmige Behälter über einen Neckring aufliegen, in Kombination mit zwei Antriebssystemen angewendet werden. Geschoben werden die Behälter entlang der Schienen beispielsweise durch eine Doppelschnecke, welche die Behälter am jeweiligen Flaschenbauch führt, und zum anderen durch ein rotierendes Bandsystem. Das Band ist mit Schiebern bestückt und drückt beziehungsweise schiebt die Flaschen am jeweiligen Neckring entlang der linearen Strecke.

Nachfolgend werden der Aufbau eines solchen beispielhaften Transportsystems und Abwandlungen davon im Detail dargelegt:

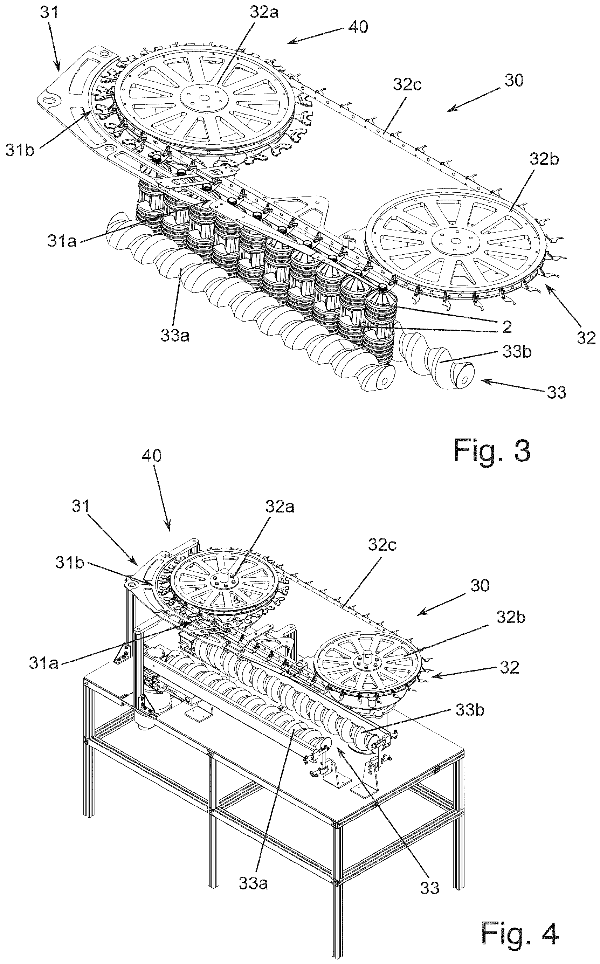

Die Figuren 3 und 4 zeigen schematische, dreidimensionale Ansichten einer linearen Transfereinrichtung 30 gemäß einem Ausführungsbeispiel, wobei die Figur 4 neben den Transportkomponenten der Figur 3 für den Transfer der Behälter weitere Baugruppen zeigt, wie etwa einen Antrieb und einen Tisch zur Montage der Transfereinrichtung 30 zeigt.

Die Transfereinrichtung 30 dient dem Transport von Behältern 2, wobei der Transport zumindest abschnittsweise linear, d.h. geradlinig, erfolgt.

Als Behälter 2 seien im vorliegenden Ausführungsbeispiel PET-Flaschen mit je einem Flaschenhals und einem Neckring herangezogen, wobei diesbezüglich keine Einschränkung besteht. Andere Behälterformen und -materialien sind möglich, solang die Behälter 2 von der linearen Transfereinrichtung 30 transportierbar sind. Vorzugsweise sind die Behälter 2 jedoch mit einem Neckring ausgestattete Flaschen oder Flaschen mit einer alternativen geeigneten Mündungsstruktur, die einen hängenden Transport der Behälter 2 durch Untergreifen beziehungsweise Unterstützen der Mündungsstruktur ermöglicht.

Mit Bezug auf die Figur 3 weist die Transfereinrichtung 30 ein Schienensystem 31 auf, das eingerichtet ist, um die Behälter 2 entlang einer zumindest teilweise linearen Trajektorie zu führen. Das Schienensystem 31 kann neben einem linearen Abschnitt 31a auch einen oder mehrere gekrümmte Abschnitte 31b umfassen, beispielsweise um die Übergabe von und/oder an einen Rundläufer zu unterstützen.

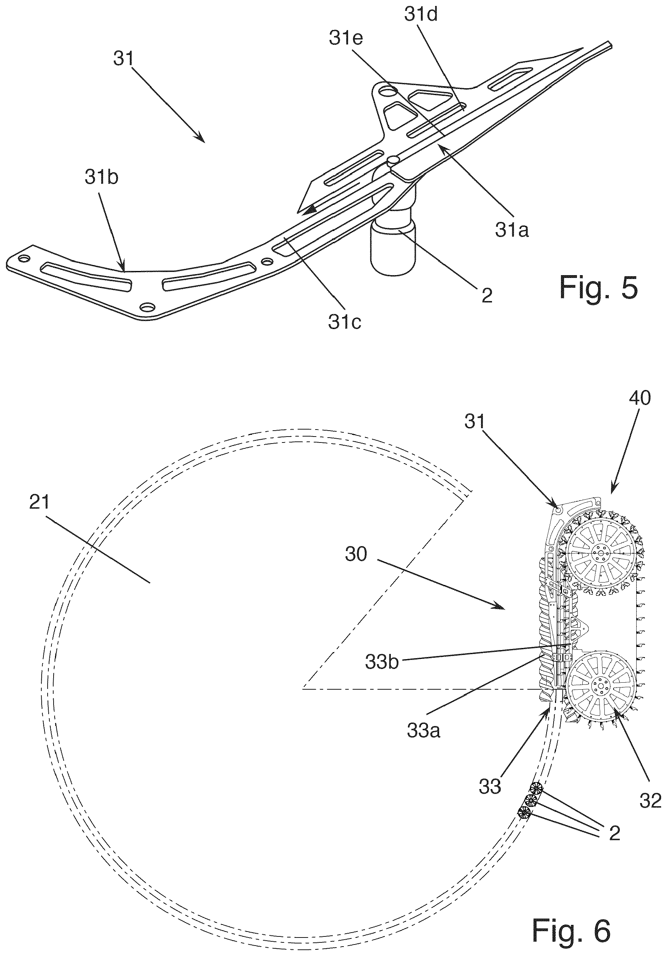

Das Schienensystem 31 ist in der Figur 5 als separate Baugruppe gezeigt. Das Schienensystem 31 umfasst hier beispielhaft eine Außenschiene 31c, die vorzugsweise im gekrümmten Abschnitt 31b mit Garnituren der Verschließeinrichtung 40 verbunden ist. Im linearen Abschnitt 31a ist zudem eine Innenschiene 31d vorgesehen, so dass zwischen der Innenschiene 31d und der Außenschiene 31c ein Spalt 31e ausgebildet wird, in dem der Flaschenhals des Behälters 2 geführt wird.

Die Funktionsweise des Schienensystems 31 geht aus der Figur 6 hervor, die eine Draufsicht auf die lineare Transfereinrichtung 30 mit einem schematisch dargestellten Einlauf beispielsweise von einer Füllvorrichtung 20 zeigt.

Der Behälter 2 verlässt die Füllvorrichtung 20 und wird unterhalb des Neckrings von dem Schienensystem 31 aufgenommen. Das Schienensystem führt den Behälter 2 im linearen Abschnitt 31a auf geradliniger Strecke. Das Schienensystem 31 ist vorzugsweise direkt mit Garnituren der Verschließeinrichtung 40 verbunden, wodurch die Verschließeinrichtung 40 den Behälter 2 unterbrechungs- und störungsfrei aufnehmen und verschließen kann.

Die Transfereinrichtung 30 umfasst ferner Fördermittel, die zum Vortrieb der Behälter 2 entlang der vom Schienensystem 31 vorgegebenen Trajektorie und zur Stabilisierung der Behälter 2 während des Transports eingerichtet sind. Im vorliegenden Ausführungsbeispiel gemäß den Figuren 3 und 4 umfassen die Fördermittel zwei Antriebssysteme, ein Bandsystem 32 und ein Doppelschneckensystem 33.

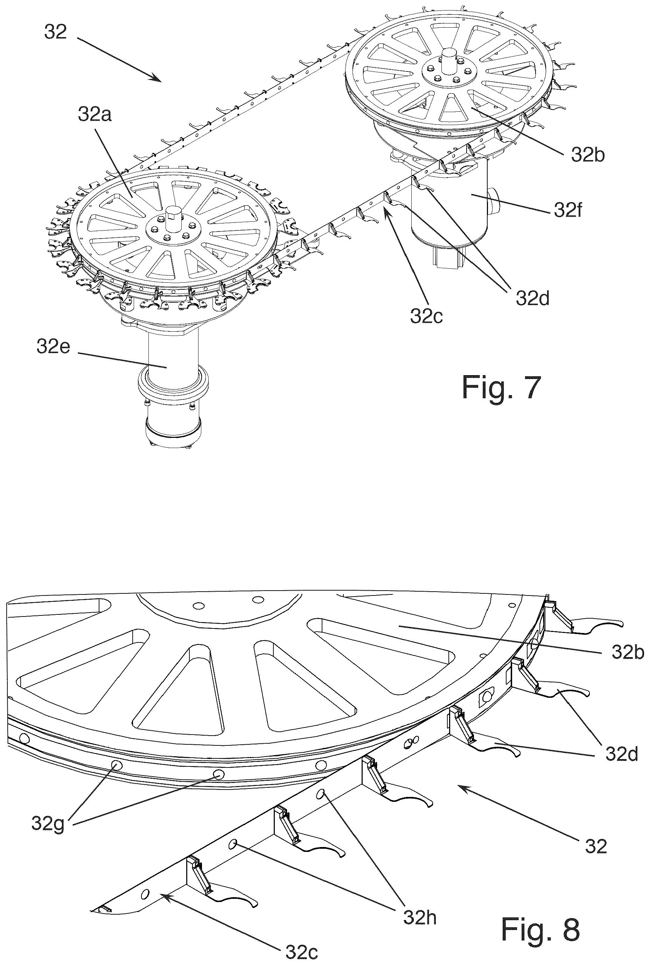

Mit Bezug auf die Figur 7 weist das Bandsystem 32 hierin zwei rotierende Scheiben 32a, 32b und ein Band 32c auf, welches um die Scheiben 32a, 32b gewickelt beziehungsweise gelegt ist und von diesen umlaufend angetrieben wird.

Eine der beiden Scheiben 32a kann bereits als Rundläufer 41 der Verschließeinrichtung 40 fungieren. Insofern können Komponenten der Verschließeinrichtung 40 und der Transfereinrichtung 30 synergetisch gemeinsam genutzt werden, hier beispielsweise die Scheibe 32a und das umlaufende Band 32c.

Das Band 32c umfasst mehrere Schubelemente 32d, die eingerichtet sind, um die Behälter 2 zu drücken beziehungsweise zu schieben, vorzugsweise im Bereich der Behältermündung, und so entlang des Schienensystems 31 zu befördern. Der Bereich der Mündung umfasst auch einen gegebenenfalls vorhandenen Neckring, der unterhalb eines gegebenenfalls vorhandenen Gewindes des Behälters 2 ausgebildet ist. Zu diesem Zweck weisen die Schubelemente 32d eine geeignete Form auf, beispielsweise mit entsprechenden Ausnehmungen, die ein sicheres Erfassen der Behälter 2 ermöglichen. Im vorliegenden Ausführungsbeispiel sind die Schubelemente 32d gebogene Bleche mit je einer Ausnehmung für einen Formschluss mit einem entsprechenden Flaschenhals, die mit dem Band 32c beispielsweise vernietet sind.

Eine oder beide Scheiben 32a, 32b werden über einen Aktuator oder mehrere synchronisierte Aktuatoren angetrieben, die in den Figuren nicht im Detail dargestellt sind. Vorzugsweise kommen ein oder mehrere Elektromotoren zur Anwendung. Die Scheiben 32a, 32b sitzen auf entsprechenden Wellen 32e, 32f, vorzugsweise Sternsäulen, über welche die Drehmomentübertragung auf die Scheiben 32a, 32b erfolgt.

Die Kraftübertragung von den Scheiben 32a, 32b auf das Band 32c kann auf verschiedene Art und Weise erfolgen, beispielsweise allein über eine riementriebartige Reibverbindung, einen Kraft- und/oder Formschluss.

Die Teilansicht der Figur 8 zeigt einen bevorzugten Weg der Kraftübertragung, die hier durch einen Formschluss erzielt wird. Zu diesem Zweck ist die Antriebsscheibe 32b mit halbkugelförmigen Vorsprüngen 32g ausgestattet, die in einem regelmäßigen Winkelabstand am Außenumfang der Scheibe 32b angeordnet sind. Die Vorsprünge 32g wirken mit entsprechenden Löchern beziehungsweise Aussparungen 32h im Band 32c zusammen, so dass eine zuverlässige Kraftübertragung durch Formschluss erzielbar ist. Die Aussparungen 32h rasten in die Vorsprünge 32g ein, wodurch ferner eine selbstzentrierende Wirkung erzielt wird. Auf diese Weise kann die Position des Bands 32c und dessen Schubelemente 32d relativ zu den Scheiben 32a, 32b exakt beibehalten wird. Dadurch wird auch die Teilung exakt gehalten, was insbesondere dann von großem Vorteil ist, wenn das Bandsystem 32 mit anderen Maschinenkomponenten, beispielsweise dem Doppelschneckensystem 33, zu synchronisieren ist.

Selbstverständlich können die Vorsprünge 32g und Aussparungen 32h auch auf andere Weise ausgebildet sein und/oder bezüglich Band 32c und Scheibe 32b vertauscht sein, solange sie eine relativ zueinander komplementäre Form aufweisen, so dass ein Formschluss zwischen beiden möglich ist und im bestimmungsgemäßen Betrieb des Bandsystems 32 zeitweise, d.h. wenn das Band 32c mit der entsprechenden Scheibe 32a, 32b in Kontakt steht, eingegangen wird.

Das Grundprinzip des Bandsystems 32 ähnelt einem Riementrieb, wobei das Band 32c vorzugsweise ein Stahlband ist. Ein Stahlband weist ein hohes Kraft-/Gewichtsverhältnis und je nach Legierung eine hohe Widerstandsfähigkeit gegenüber Chemikalien, Feuchtigkeit und Korrosion auf. Ferner ist eine gute Haltbarkeit auch bei hohen Temperaturen und unter Vakuum gewährleistet. Eine Schmierung ist für den Betrieb des Stahlbands nicht erforderlich, wodurch sich insgesamt ein geringer Wartungsaufwand und eine hohe Zuverlässigkeit ergeben. Ein Stahlband kann vergleichsweise schwingungsarm betrieben werden und ist nicht oder nur unwesentlich dehnbar. Daraus ergibt sich, dass damit ein hoher Präzisionsgrad, eine genaue Anwendung und Reproduzierbarkeit erzielbar sind. Das Stahlband weist eine gute thermische und elektrische Leitfähigkeit auf und unterliegt keiner statischen Aufladung. Mit Anwendung eines Stahlbands kann ferner ein hoher Hygienegrad erzielt werden, wodurch es bei Reinraumanwendungen, etwa beim Abfüllen von Lebensmitteln oder Pharmazeutika, besonders geeignet ist.

Die Figuren 3, 4, 6, 7 und 8 zeigen das Bandsystem 32 mit zwei Scheiben 32a und 32b. Allerdings können optional eine oder mehrere weitere Umlenkscheiben vorgesehen sein. Ferner kann anstelle des Bands 32c auch ein anderes Transportmittel, wie beispielsweise eine Kette, ein Draht oder ein Riemen verwendet werden. Diese und etwaige weitere geeigneten Alternativen fallen hierin unter die Bezeichnung "Band".

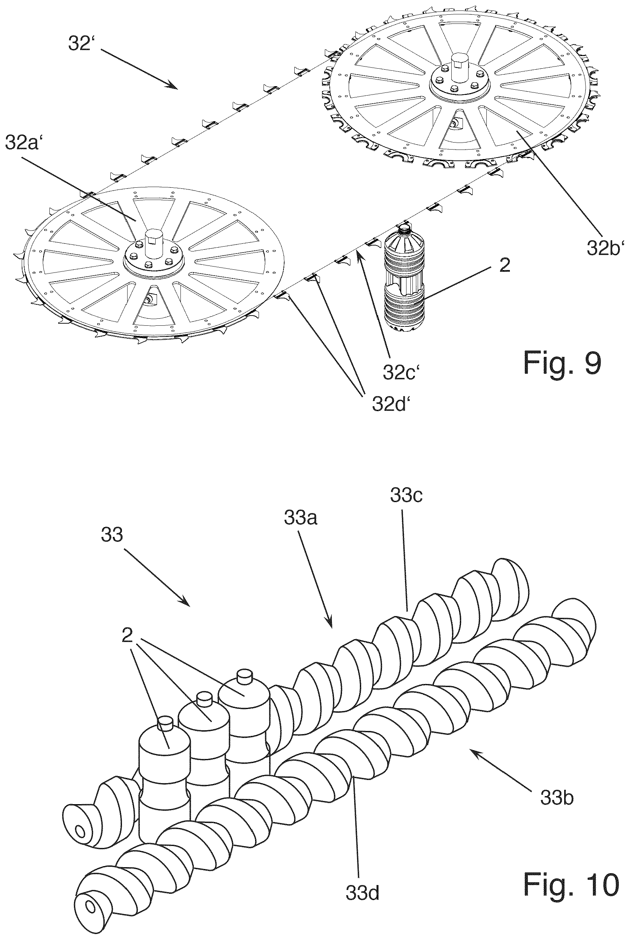

Die Figur 9 zeigt ein solches alternatives Bandsystem 32', das anstelle eines Bands 32c, hergestellt aus einem streifenförmigen Material, ein Seil 32c', vorzugsweise Stahlseil oder Draht, verwendet. Die Schubelemente 32d' sind hierbei am Draht beziehungsweise Seil 32c' angebracht, vorzugsweise über zwei Punkte: eine feste Verbindung und eine lose Verbindung. Das Seil 32c' läuft angetrieben von den Scheiben 32a', 32b' um, wobei vorzugsweise ein Formschluss zwischen dem Seil 32c' und den Scheiben 32a', 32b' vorliegt, um eine sichere und schlupffreie Kraftübertragung zu gewährleisten. Der Formschluss kann an den Anbindungsstellen der Schubelemente 32d' realisiert werden. Optional kann ein Elastomer in die Seilführung der Antriebsscheibe 32a' und/oder 32b' eingebracht werden, um die Kraftübertragung zu verbessern. Die Schubelemente 32d' werden durch das Schienensystem 31 in der horizontalen Lage gehalten. Zur Funktionsweise des Bandsystems 32 sei nochmals auf die Figur 6 verwiesen. Auf der Füllerseite werden die Behälter 2 von der Füllvorrichtung 20 entnommen und mittels der Schubelemente 32b, 32b' entlang des Schienensystems 31 geschoben. Die andere Seite des Bandsystems 32 ist in der Verschließvorrichtung 40 integriert. Wurde der Behälter 2 von der Verschließeinrichtung 40 aufgenommen, fährt das entsprechende Schubelement 32b, 32b' nur noch passiv mit und kehrt zum Ausgangspunkt des Umlaufs zurück.

Die lineare Transfereinrichtung 30 weist gemäß dem vorliegenden Ausführungsbeispiel ein weiteres Antriebssystem auf, das hierin vorzugsweise als Doppelschneckensystem 33 ausgeführt ist.

Mit Bezug auf die Figur 10 umfasst das Doppelschneckensystem 33 eine erste Schnecke 33a und eine zweite Schnecke 33b, die parallel zueinander angeordnet und jeweils um die eigene Achse drehbar sind.

Die Schnecken 33a, 33b weisen jeweils ein Transportgewinde 33c, 33d auf, das eine spiralförmige Ausnehmung zur teilweisen Aufnahme des Behälters 2 ist. Vorzugsweise umfassen beziehungsweise greifen die Schnecken 33a, 33b den Behälter 2 am Bauchabschnitt, wie es aus der Figur 10 hervorgeht. Durch gegensinniges Drehen der beiden Schnecken 33a, 33b wird ein eingesetzter Behälter 2 in Axialrichtung der Schnecken 33a, 33b durch einen Formschluss, zumindest einen teilweisen Formschluss, transportiert.

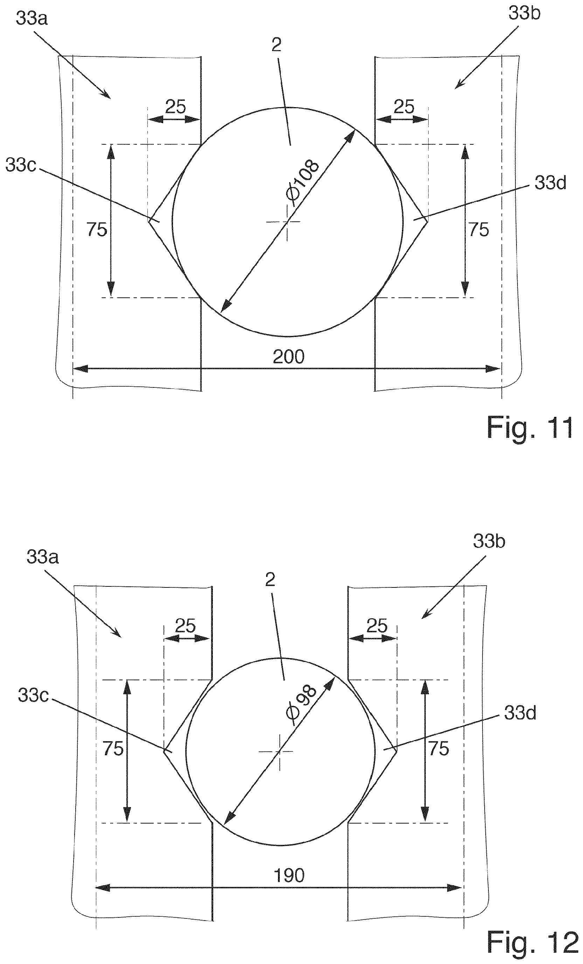

Besonders bevorzugt weisen die Transportgewinde 33c, 33d einen V-förmigen Querschnitt auf, im Schnitt parallel zur Axialrichtung der Schnecken 33a, 33b gesehen, wie es aus der Figur 11 hervorgeht.

Die Figur 11 enthält einige Beispielmaße, angegeben in mm, beispielsweise für den Durchmesser des Behälters 2 und den Abstand der beiden Schnecken 33a, 33b voneinander. Selbstverständlich ist die Bemaßung nur beispielhaft; sie hilft jedoch aus einem Vergleich mit der Figur 12, in der ein Behälter mit geringerem Durchmesser (im Vergleich zur Figur 11) eingesetzt ist, zu erkennen, dass die V-Form des Transportgewindes 33c, 33d den Transport verschiedener Behältergrößen, insbesondere verschiedener Flaschendurchmesser, ermöglicht. Zu diesem Zweck muss lediglich der Mittelachsenabstand der Schnecken 33a, 33b verändert werden.

Um einen sanften Einlauf der Behälter 2 in das Doppelschneckensystem 33 zu ermöglichen, kann der Gewindeausschnitt 33e am Behältereintritt so groß beziehungsweise tief ausgebildet sein, dass der Behälter 2 von den Schnecken 33a, 33b zunächst nicht berührt wird.

Der "Gewindeausschnitt" bezeichnet hierbei die Aussparungstiefe des Transportgewindes 33c, 33d, die bei gleichbleibendem V-Winkel die axiale Länge der Gewindeausnehmung am Außenumfang der Schnecke 33a, 33b mitbestimmt. Der Gewindeausschnitt 33e wird nach und nach kleiner, bis der gewünschte beziehungsweise erforderliche Ausschnitt erreicht ist und der Behälter 2 ausreichend umfasst beziehungsweise ummantelt ist, so dass die Schnecken 33a, 33b den Behälter 2 durch Formschluss vortreiben können.

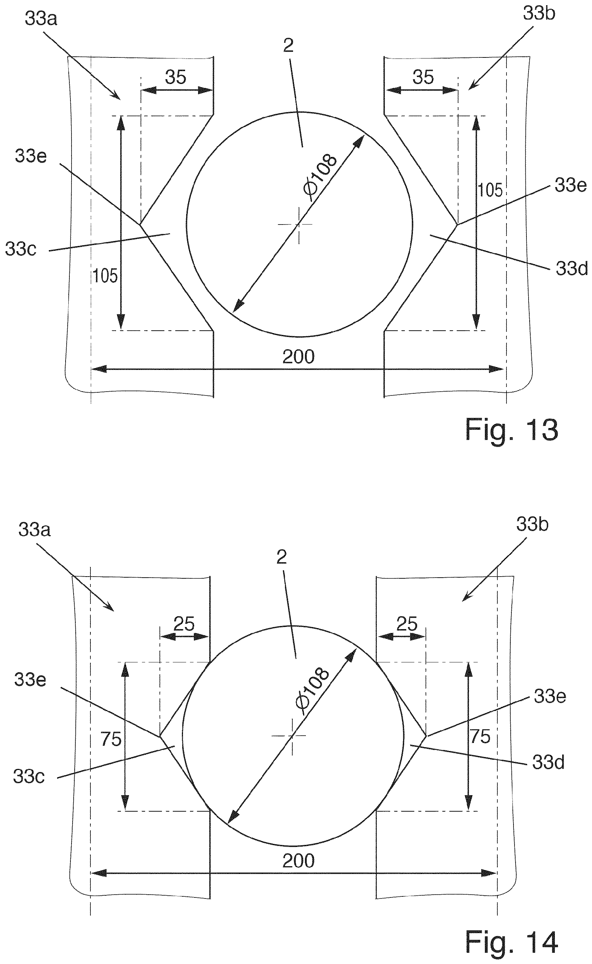

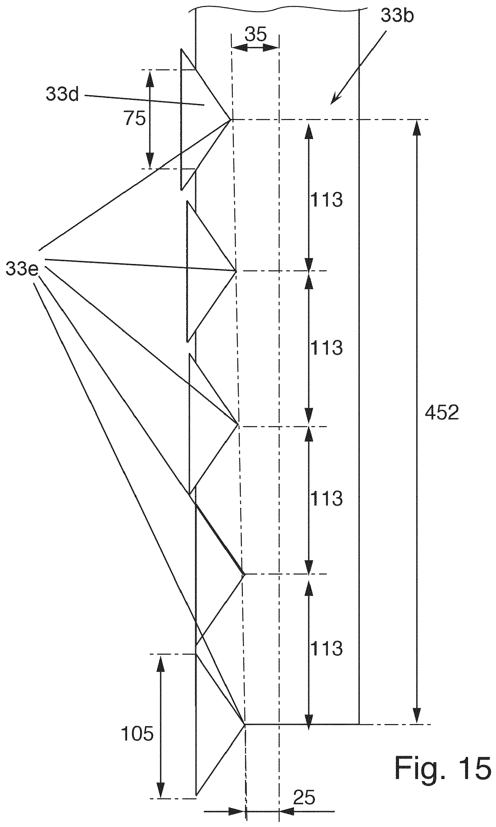

Dieser besondere Gewindeeinlauf zur sanften Aufnahme der Behälter 2 geht aus einem Vergleich der Figuren 13 und 14 hervor. Die Änderung des Gewindeausschnitt 33e in Axialrichtung der Schnecke 33b gesehen, ist in der Figur 15 gezeigt.

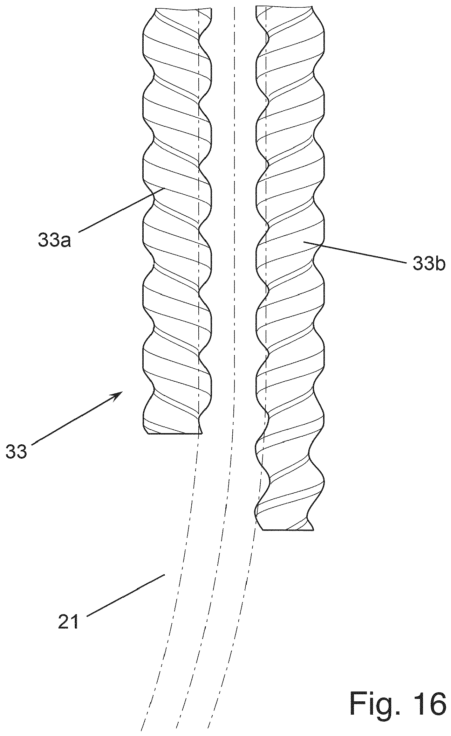

Ebenfalls zum Zweck des problemlosen Einlaufs der Behälter 2 kann die von einem Einlaufradius abgewandte Schnecke 33b länger ausgebildet sein, wie es besonders deutlich aus der Figur 16 hervorgeht.

Zur Funktionsweise des Doppelschneckensystems 33 sei nochmals auf die Figur 10 verwiesen. Nachdem ein Behälter 2 in das Doppelschneckensystem 33 eingetreten ist, beispielsweise kurz bevor er die Füllvorrichtung 20 verlässt, umfassen die Transportgewinde 33c, 33d der Schnecken 33a, 33b den Bauch des Behälters 2 zunächst ohne Berührung und dann nach und nach enger, wodurch der Behälter 2 auf sanfte Art und Weise übergeben und stabilisiert wird. Etwaige Pendelbewegungen werden durch das Doppelschneckensystem 33 wirksam unterbunden. Gleichzeitig wird der Behälter 2 durch das Doppelschneckensystem 33 in Transportrichtung vorgeschoben. Zu diesem Zweck werden die Schnecken 33a, 33b gegensinnig und synchron um ihre Achsen gedreht. Die Schnecken 33a, 33b schieben den Behälter 2 aufgrund der V-Form der Transportgewinde 33c, 33d über nur zwei Angriffspunkte entlang der linearen Trajektorie der Transfereinrichtung 30, wodurch der Behälter 2 besonders schonend behandelt wird. Das Doppelschneckensystem 33 ist ferner mit dem Bandsystem 32 synchronisiert, um einen gleichmäßigen und sicheren Transport der Behälter 2 zu gewährleisten. Nachdem ein Behälter 2 den Transportweg des Doppelschneckensystems 33 zurückgelegt hat, wird er von der Verschließeinrichtung 40 aufgenommen.

Ein vollständiger Transportvorgang eines Behälters 2 mittels der linearen Transfereinrichtung 30 kann wie folgt ablaufen: Ein von der Fülleinrichtung 20 mit einem Füllprodukt befüllter Behälter 2 nähert sich einem Bereich zur Übergabe an die Transfereinrichtung 30. Die Schnecken 33a, 33b des Doppelschneckensystems 33 umfassen den Behälter 2 zunächst berührungslos. Eine Klammer der Fülleinrichtung 20 zur Halterung und zum Transport des Behälters 2 öffnet sich. Die Behältermündung wird vom Schienensystem 31 aufgenommen, und die Schnecken 33a, 33b stehen nun im vollständigen Eingriff mit dem Behälter 2. Ein Schubelement 32d, 32d' nähert sich dem Mündungsbereich des Behälters, insbesondere einem Neckring, sofern vorhanden. Der Behälter wird durch insgesamt drei Kraftangriffspunkte, zweimal Schnecke 33a, 33b und einmal Schubelement 32d, 32d' entlang des Schienensystems 31 geschoben. Im Anschluss an den Transport entlang der linearen Trajektorie der Transfereinrichtung 30 wird der Behälter der Verschließeinrichtung 40 übergeben, beispielsweise indem der Behälter vom Schienensystem 31 in eine Spikeplatte einer Behälterhalterung der Verschließeinrichtung 40 fällt. Das Schubelement 32d, 32d' löst den Eingriff, und der Behälter 2 verlässt das Doppelschneckensystem 33. Der Behälter 2 wird zunächst weiter einseitig durch die Außenschiene 31c des Schienensystems 31 geführt, um eine sanfte Übergabe an die Verschließeinrichtung 40 zu gewährleisten.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Vorrichtung zum Befüllen und Verschließen eines Behälters
- 2: Behälter
- 10: Einlaufstern
- 20: Füllvorrichtung
- 21: Rundläufer
- 22: Drehachse des Rundläufers der Füllvorrichtung
- 23: Füllertotwinkel
- 30: Vorrichtung zum linearen Transportieren eines Behälters
- 31: Schienensystem
- 31a: Linearer Abschnitt
- 31 b: Gekrümmter Abschnitt
- 31c: Außenschiene
- 31d: Innenschiene
- 31e: Spalt
- 32: Bandsystem
- 32': Bandsystem
- 32a: Scheibe
- 32a': Scheibe
- 32b: Scheibe
- 32b': Scheibe
- 32c: Band
- 32c': Seil
- 32d: Schubelement
- 32d': Schubelement
- 32e: Welle/Säule
- 32f: Welle/Säule
- 32g: Vorsprung
- 32h: Aussparung
- 33: Doppelschneckensystem
- 33a: Erste Schnecke
- 33b: Zweite Schnecke
- 33c: Transportgewinde
- 33d: Transportgewinde
- 33e: Gewindeausschnitt
- 40: Verschließvorrichtung
- 41: Rundläufer
- 50: Transportweg
- 100: Vorrichtung zum Befüllen und Verschließen von Behältern
- 110: Einlaufstern
- 120: Füllvorrichtung
- 121: Rundläufer
- 122: Drehachse des Rundläufers der Füllvorrichtung
- 123: Füllertotwinkel
- 130: Auslaufstern
- 140: Verschließvorrichtung
- 141: Rundläufer
- 150: Transportweg

## Patentansprüche

1. Vorrichtung (30) zum Transportieren eines Behälters (2), vorzugsweise in einer Getränkeabfüllanlage, wobei die Vorrichtung (30) aufweist:
ein Schienensystem (31), das eingerichtet ist, um den Behälter (2) entlang einer linearen Trajektorie zu führen;
ein Transportsystem (32, 33), das eingerichtet ist, um den Behälter (2) entlang des Schienensystems (31) zu transportieren, vorzugsweise durch eine formschlüssige Verbindung; und
zumindest einen Rundläufer (21, 41) mit einer gekrümmten, vorzugsweise kreisförmigen, Transporttrajektorie, der so mit dem Schienensystem (31) und dem Transportsystem (32, 33) in Verbindung steht, dass der Behälter (2) von der gekrümmten Transporttrajektorie des Rundläufers (21, 41) an das Schienensystem (31) übergeben wird und/oder der Behälter (2) vom Schienensystem (31) an die gekrümmte Transporttrajektorie des Rundläufers (21, 41) übergeben wird.

2. Vorrichtung (30) nach Anspruch 1, **dadurch gekennzeichnet, dass** das Schienensystem (31) einen linearen Abschnitt (31a) und einen in Transportrichtung des Behälters (2) sich daran anschließenden gekrümmten Abschnitt (31b) umfasst, wobei der gekrümmte Abschnitt (31b) zur Übergabe an einen Rundläufer (41) vorgesehen ist.

3. Vorrichtung (30) nach Anspruch 2, **dadurch gekennzeichnet, dass** das Schienensystem (31) eine Außenschiene (31c), die im gekrümmten Abschnitt (31b) vorzugsweise mit Garnituren des Rundläufers (41) verbunden ist, und zumindest im linearen Abschnitt (31a) eine Innenschiene (31d) aufweist, so dass zwischen der Innenschiene (31d) und der Außenschiene (31c) ein Spalt (31e) ausgebildet ist, der zum Führen eines Mündungsbereichs des Behälters (2) eingerichtet ist.

4. Vorrichtung (30) nach einem der vorigen Ansprüche, **dadurch gekennzeichnet, dass** das Transportsystem (32, 33) mindestens zwei Antriebssysteme umfasst, die eingerichtet sind, um je eine Transportkraft auf zumindest zwei verschiedene Abschnitte des Behälters (2), in Schwerkraftrichtung gesehen, aufzubringen.

5. Vorrichtung (30) nach einem der vorigen Ansprüche, **dadurch gekennzeichnet, dass** das Transportsystem (32, 33) ein Bandsystem (32) umfasst, das zumindest zwei drehbare Scheiben (32a, 32b) und ein Band (32c) aufweist, das so um die Scheiben (32a, 32b) gelegt ist, dass es von den Scheiben (32a, 32b) umlaufend antreibbar ist, wobei das Band (32c) mehrere Schubelemente (32d) aufweist, die eingerichtet sind, um den Behälter (2) bei umlaufendem Band (32c) entlang des Schienensystems (31) zu schieben, wobei das entsprechende Schubelement (32d) vorzugsweise im Bereich der Behältermündung angreift.

6. Vorrichtung (30) nach Anspruch 5, **dadurch gekennzeichnet, dass** die Kraftübertragung von zumindest einer der Scheiben (32a, 32b) auf das Band (32c) einen Formschluss umfasst.

7. Vorrichtung (30) nach Anspruch 6, **dadurch gekennzeichnet, dass** die betreffende Scheibe (32a, 32b) oder das Band (32c) Vorsprünge (32g), vorzugsweise mit kugelförmiger Gestalt, und die andere Komponente entsprechende Aussparungen (32h) aufweist, in welche die Vorsprünge (32g) während des Umlaufs des Bands (32c) zeitweise in Eingriff kommen.

8. Vorrichtung (30) nach einem der Ansprüche 5 bis 7, **dadurch gekennzeichnet, dass** das Band (32c) ein Stahlband ist.

9. Vorrichtung (30) nach einem der Ansprüche 5 bis 7, **dadurch gekennzeichnet, dass** das Band (32c) ein Seil, Draht (32c'), eine Kette oder ein Riemen ist.

10. Vorrichtung (30) nach einem der vorigen Ansprüche, **dadurch gekennzeichnet, dass** das Transportsystem (32, 33) ein Doppelschneckensystem (33) umfasst, das eine erste Schnecke (33a) und eine zweite Schnecke (33b) aufweist, die parallel zueinander angeordnet und jeweils um die eigene Achse drehbar sind, wobei die Schnecken (33a, 33b) jeweils ein Transportgewinde (33c, 33d) aufweisen, die eingerichtet sind, um den Behälter (2) zumindest abschnittsweise zu umfassen, vorzugsweise seitlich an einem Bauchabschnitt des Behälters (2), so dass durch gegensinnige Drehung der Schnecken (33a, 33b) der Behälter (2) in Transportrichtung förderbar ist.

11. Vorrichtung (30) nach Anspruch 10, **dadurch gekennzeichnet, dass** die Transportgewinde (33c, 33d) einen V-förmigen Querschnitt aufweisen, im Schnitt parallel zur Axialrichtung der Schnecken (33a, 33b) gesehen.

12. Vorrichtung (30) nach Anspruch 10 oder 11, **dadurch gekennzeichnet, dass** die Transportgewinde (33c, 33d) einen Gewindeausschnitt (33e) aufweisen, der ausgehend von einem Einlauf des Behälters (2) in das Doppelschneckensystem (33), an dem der Gewindeausschnitt (33e) so groß ausgebildet ist, dass die Schnecken (33a, 33b) den Behälter (2) nicht berühren, nach und nach kleiner wird, bis der Gewindeausschnitt (33e) den Behälter (2) formschlüssig umfasst.

13. Vorrichtung (1) zum Befüllen und Verschließen eines Behälters (2), vorzugsweise in einer Getränkeabfüllanlage, wobei die Vorrichtung (1) aufweist:
eine Füllvorrichtung (20) zum Befüllen des Behälters (2) mit einem Füllprodukt;
eine Verschließvorrichtung (40) zum Verschließen des mit dem Füllprodukt befüllten Behälters (2) mit einem Verschluss; und
eine Vorrichtung (30) zum Transportieren des Behälters (2) gemäß einem der Ansprüche 1 bis 12, die eingerichtet ist, um den mit dem Füllprodukt befüllten Behälter (2) von der Füllvorrichtung (20) zu übernehmen, linear zu transportieren und anschließend an die Verschließvorrichtung (40) zu übergeben.

14. Vorrichtung (1) nach Anspruch 13, **dadurch gekennzeichnet, dass** die Füllvorrichtung (20) einen Rundläufer (21) aufweist, der eingerichtet ist, um den Behälter (2) während der Befüllung entlang einer gekrümmten, vorzugsweise kreisförmigen, Trajektorie zu transportieren, und/oder die Verschließvorrichtung (40) einen Rundläufer (41) aufweist, der eingerichtet ist, um den Behälter (2) während des Verschließens entlang einer gekrümmten, vorzugsweise kreisförmigen, Trajektorie zu transportieren.
